# EUROPEAN PATENT APPLICATION

(11) **EP 1 785 921 A1**
(43) Date of publication of application: **16.05.2007**
(21) Application number: 05077565.9
(22) Date of filing: 10.11.2005
(51) Int. Cl.: G06Q 10/00

(54) **A system for automatically assigning an incoming quantity of goods in response to an event, a computer implemented method, a user terminal and a computer readable storage medium**

(71) Applicant: SAP AG, 69190 Walldorf (DE)
(72) Inventor: Esau, Andreas, D-76684 Östringen (DE); Helmolt, Hans-Ulrich, D-69121 Heidelberg (DE); Hirth, Gerhard, D-69234 Dielheim (DE); Mayer, Thomas, D-69181 Leimen (DE)
(74) Representative: Winckels, Johannes Hubertus F.

(57) **Abstract**

The invention relates to system for automatically assigning an incoming quantity of goods in response to an event, the system comprising:
an inbound interface for interfacing with a plurality of data storage devices in at least one of which the incoming quantity of goods are stored as data and a plurality of sales orders to be confirmed are stored;
an execution memory operable to hold a software system, and
a processor for coupling to the inbound interface and the execution memory, the processor being operable to execute the software system such that the software system operates:
to select a subset of sales orders from the plurality of sales to be confirmed according to one or more predetermined criteria and to assign to the subset of sales orders the incoming quantity of goods.

## Description

The invention relates to a system for automatically assigning an incoming quantity of goods in response to an event, a computer implemented method, a user terminal and a computer readable storage medium.

Supply chain management software systems are known, for example, SAP's Supply Chain Management system. Such a supply chain management system includes a plurality of applications for implementing the management of the supply chain. These applications are for example SAP Advanced Planning and

Optimization (SAP APO) and Extended Warehouse Management (EWM). A core interface (CIF) connects SAP SCM with online transaction processing systems (OLTP), such as SAP Customer Relations Management (SAP CRM) and Enterprise Resource Planning (ERP). In particular, the core interface connects the OLTP to the SAP APO. In supply chain management, when a product is available to be promised to a customer it is "available to promise" (ATP). Supply chain management systems including available to promise (ATP) functionality are known. Supply Chain Management applications, such as SAP APO include ATP functionality. Such systems include software for determining whether a product is available to promise. The determination may include performing an availability check when a customer calls to place an order.

In conventional supply chain management systems, for example, SAP SCM, events that may improve the availability situation of a given material, for example, changes in stock, new planned supply or drop of demand, cannot be evaluated to trigger functions or processes in order to optimize business opportunities, i.e. distribution of any additional surplus closely in time to the occurring event. In conventional systems, a realignment of the availability situation, in response to an event, is only possible by mass availability check runs initiated at predefined points in time, for example, manually or periodically scheduled as a background job. The resulting time delay with respect to the monitoring effort leads to significant business impact since supply which would be available is not assigned directly to high prioritized demands or demands that were put in at an earlier time. Thus, the business performance is compromised.

It is desirable to address those problems identified in conventional systems. In particular, it is desirable to improve the business performance aspects of the application availability check to ensure that available stock can be assigned to sales orders more quickly. Thus, it is further desirable to increase the speed with which aspects of the availability check can be carried out.

To address the above mentioned problems, there is provided according to a first aspect of the invention, a system for automatically assigning an incoming quantity of goods in response to an event, the system comprising:
an inbound interface for interfacing with a plurality of data storage devices in at least one of which the incoming quantity of goods are stored as data and a plurality of sales orders to be confirmed are stored;
an execution memory operable to hold a software system, and
a processor for coupling to the inbound interface and the execution memory, the processor being operable to execute the software system such that the software system operates:
   to select a subset of sales orders from the plurality of sales to be confirmed according to one or more predetermined criteria and to assign to the subset of sales orders the incoming quantity of goods. In contrast to conventional systems where a realignment of the availability situation after changes in stock, planned supply or demand change is only possible by mass availability check runs initiated at predetermined points in time, for example, after supply planning. In accordance with an aspect of the invention, using event driven quantity assignment, it is possible to assign in real time document changes as events which immediately trigger the fulfilment of certain demands, for example, high priority sales orders, and /or trigger deployment processes.

According to a second aspect of the invention, there is provided a computer implemented method of automatically assigning an incoming quantity of goods in response to an event, the method comprising:
interfacing with a plurality of data storage devices in at least one of which the incoming quantity of goods are stored as data and a plurality of sales orders to be confirmed are stored;
hold a software system in an executable memory, and
coupling the inbound interface to the execution memory,
executing the software system such that the software system operates:
   to select a subset of sales orders from the plurality of sales to be confirmed according to one or more predetermined criteria and to assign to the subset of sales orders the incoming quantity of goods.

According to a third aspect of the present invention, there is provided a user terminal comprising means operable to perform the method of claim 7.

According to a fourth aspect of the present invention, there is provided a computer readable storage medium storing a program which when run on a computer controls the computer to perform the method of claim 7.

By way of example only, embodiments of the present invention will now be described with reference to the accompanying Figures in which:
Figure 1 shows backorder processing (BOP) within which an embodiment of the invention has application;
Figure 2 shows an event driven quantity assignment according to an embodiment of the invention;
Figure 3 shows a system for carrying out an availability check according to an embodiment of the invention;
Figure 4 shows an activated ODL according to an embodiment of the invention, and
Figure 5 shows a screen shot showing how the selection via a chain is visible in the system according to an embodiment of the invention.
Like reference numerals indicate like elements.

As mentioned, SAP CRM or ERP are OLTP systems. SAP CRM and ERP are systems for the daily online transaction processing, where, for example, the sales orders are entered. SAP APO is a component of SAP SCM. SAP APO is a logistic planning system. ATP is a component of SAP APO. A core interface CIF connects the OLTP to the SAP APO. It provides functions to transfer the business data between the two types of systems. An availability check is carried out when a customer enquires about placing an order. ATP is the component that executes the availability check. The availability check takes into account existing stock and also the quantities of future incoming or outgoing orders that should be delivered by the date of the order to determine whether the product is available to promise. If a quantity (of stock or an incoming order) is promised to a first customer, a second customer cannot access the reserved quantity. If there is not enough quantity to honor a complete order as requested, the order can be confirmed at a later date or may stay unconfirmed respectively partially confirmed. If the product is available to promise, the order can be confirmed. Rules based availability check can be used to automatically or manually optimize the decision making process between alternatives using predefined rules. In a sales order RBA can cause creating of a main item with several sub-items reflecting the alternatives on product/location level. For example, if a customer orders a yellow car, the rule may specify that he will be given a red car instead. Similarly, if the order cannot be confirmed from stock in a first manufacturing location, the rule may specify that the order is honored from stock in a second manufacturing location. In this way, global ATP is provided, to allow, for example, a switch between locations. Further, in a situation where there are several orders which cannot all be confirmed, those order which cannot be confirmed become back orders. Back orders are sales documents whose order items cannot be completely confirmed as requested due to lack of availability or material shortages. Orders, including back orders, may be assigned a priority rating. For example, a high priority order and a low priority order. If a high priority order cannot be confirmed immediately, it becomes a back order. Back order processing (BOP) is a technical vehicle for dealing with back orders. BOP is a tool of the ATP component, for example in SAP APO. Using BOP, an available quantity of one or more products can be reallocated using a quantity of selected requirements. BOP may be carried out as interactive BOP or batch BOP.

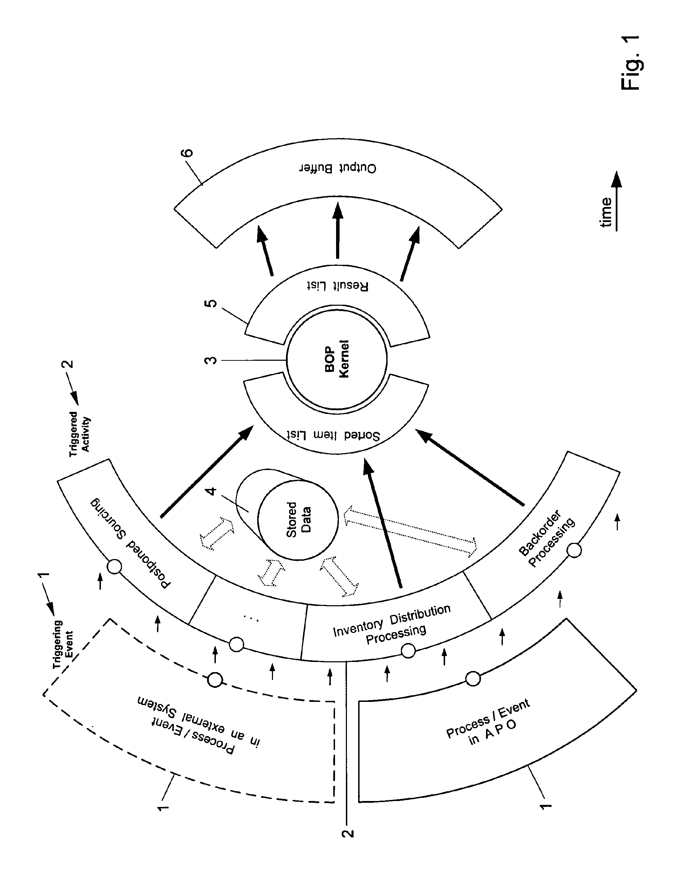

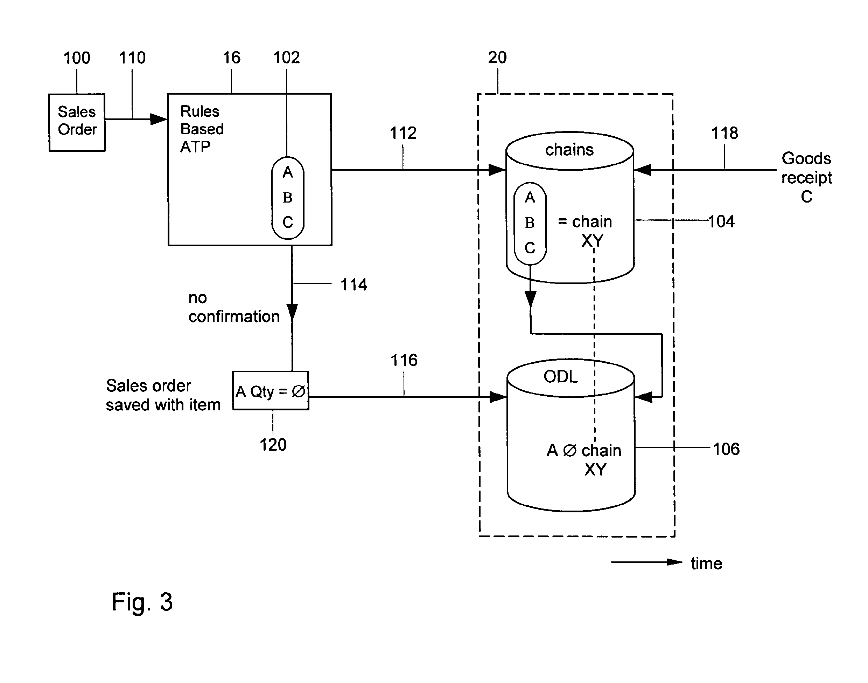

Thus, a situation may arise where there may be a plurality of backorders and an event may occur such as incoming quantity may becoming available, for example, incoming goods or a cancelled order. In accordance with an embodiment of the invention, the event triggers a redistribution of the incoming quantity. This may be achieved using event driven quantity assignment services, wherein one or more activities, for example, changes in stock, are defined with respect to an event, as shown and described with respect to Figure 1. Further, an order due list, described in further detail with respect to Figures 3-6, may be assigned to the event. In particular, the order due lists restricts the number of order that are looked into in order to identify the affected items. Depending on the parameter values that are valid in the particular inbound interface, different ODLs can be used. The potential amount of items that are to be confirmed can be kept small by customizing the ODL. In this way, the speed of the assignment is improved. Further by customizing the ODL, for example, to identify high priority backorders, the incoming goods can be assigned to those orders having the highest business priority. Thus, improving the efficiency of the business is given.

In particular, according to embodiments of the invention, event driven global available to promise services in a supply chain management system, for example, SAP SCM, are exploited by offering a technique to release quantities to prioritized order requirements. Positive changes of ATP quantity are registered in corresponding SAP SCM inbound interfaces. Inbound interfaces include an interface for stock changes, interface for purchase order, interface for sales orders. Using event driven global available to promise services in SAP SCM it is possible to assign now individually defined document changes communicated to SAP SCM from an external OLTP as events which immediately trigger the fulfillment of high prioritized demands and/or the deployment process (e.g. for spare parts planning). Depending on the activities, for example, change stock data, change purchase order document, change sales document and back order processing, and the individually definable selection criteria, according to an embodiment of the invention, the quantity is distributed according to the range of selected order items that have to be confirmed and their sort sequence. The order due lists deliver the information for selection and sort. If all waiting order items (backorders) are confirmed, the still available quantity may be deployed to other facilities.

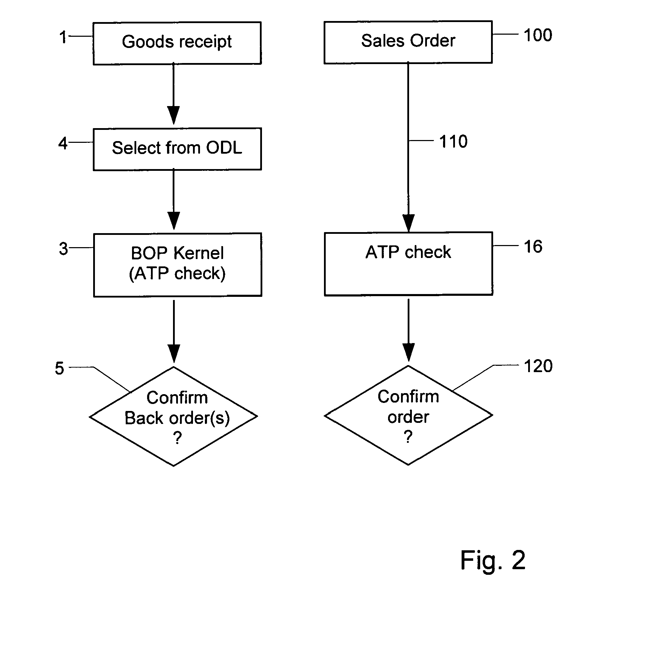

Event driven global available to promise, in accordance with an embodiment of the invention, can prove a trigger via the workflow event "Quantity release to order due lists". The confirmation process is based on the standard mass availability check (backorder processing), but uses order due lists to reduce the number of selected items and accelerate the process. A parameter set finally determines, if and how event driven quantity assignment will be executed. The quantity that is being distributed can be protected in addition, by changing its category, which makes it invisible to the standard ATP check, as described and shown in Figure 2.

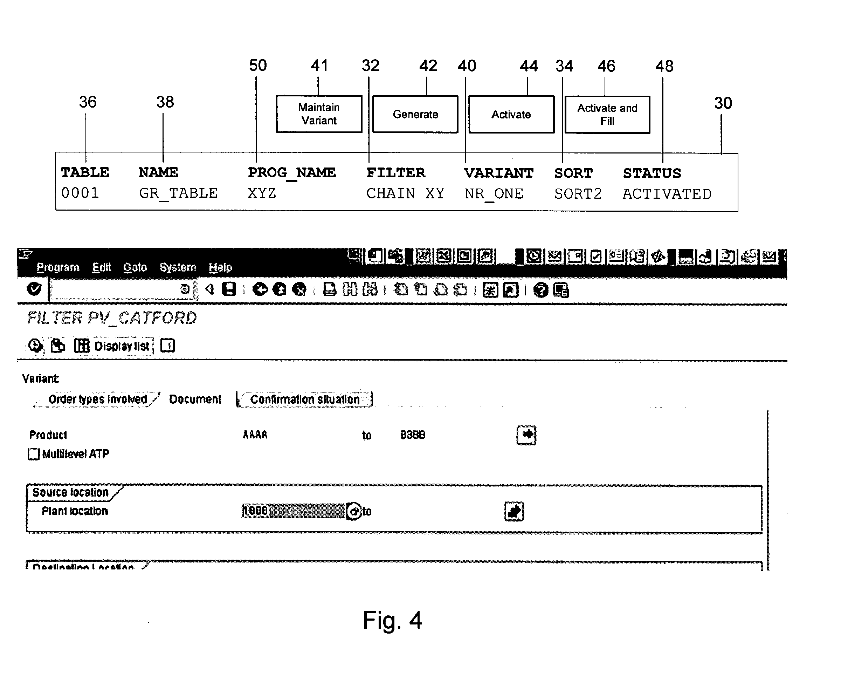

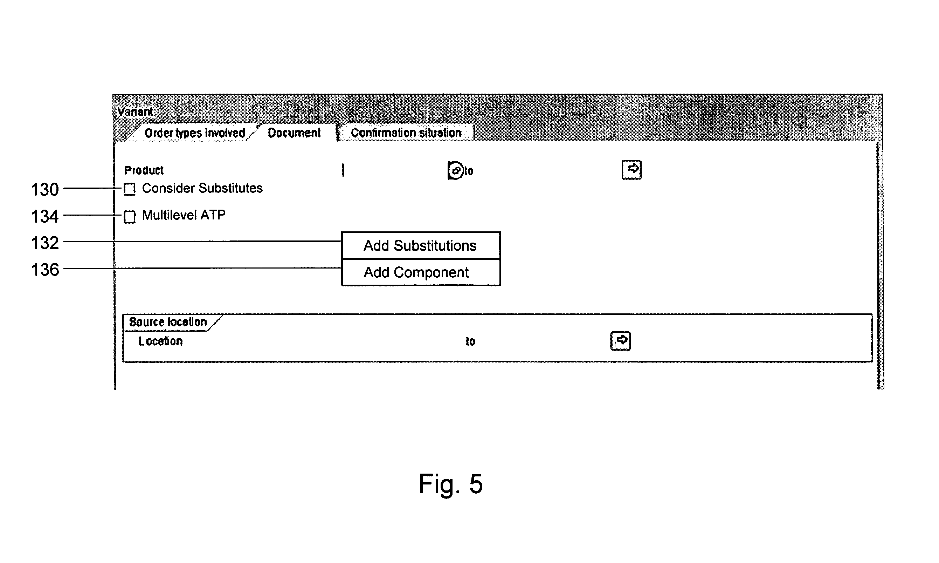

Figure 1 shows backorder processing (BOP) within which an embodiment of the invention has application. Figure 1 shows back order processing (BOP) and its triggering events. As shown in Figure 1 there is a flexible assignment of pre-defined events and triggering modules to start workflows that are related to back order processing (BOP). An EDQA Agent 2 handles this assignment. The EDQA agent is a tool that is related to BOP. The EDQA agent uses ODLs as input for confirmation of back ordered items after being triggered, by an event, for example, by goods receipt. EDQA uses a processor, in particular, BOP kernel 3 (a BOP based process step) and its output mechanism during the workflow. For example, in Figure 1, the triggering event 1 may be a process/even in an external system, for example, a goods receipt. Once the goods are received, EDQA is triggered, as the triggered activity 2. The EDQA agent 2 reads the stored data in the data storage system 4 (in this case ODL). Subsequently, BOP is carried out by the BOP kernel 3. In order to determine which items are affected, order due lists may be used to select the affected items. In this way, the speed of the backorder processing is increased. Further, the ODL may be customized in order to determine which items are selected, for example, on the basis of a priority rating. In this way, those items having the most business importance may be confirmed. Order due lists are described in further detail with reference to Figures 4 and 5. BOP is carried out when necessary. It may be carried out as a batch. The result list 5 of the BOP is provided to an output buffer 6, which is the SAP APO storage system. The result list in the output buffer is subsequently sent to the OLTP system.

In the case where the invention can be applied in back order processing, a processor 3, such as a back order kernel 3 carries out the back order processing which includes carrying out an availability check including RBA. At first the process decides which items of the back order are to be checked and in which sequence. In order to do this a filter is defined. The filter has a filter type which defines which criteria are used to select the items to be processed. Criteria are for example, such as, customer type, product/location, item type (for example, sales order). The filter also has a filter variant which defines which values of defined criteria meet the conditions of the filter. The order items are stored in the OLTP system. They may also be stored in SAP APO. The filtering selects items corresponding to the particular filter to the particular data base. For example, the filter type may define a parameter - customer type. The filter variant may define the parameter value - customer type - very important or medium. In this way, the filter is defined. This filter then selects only items having a very important and medium important customer. In one embodiment, the filter can be designed to define back orders.

A further situation is now described. In event driven quantity assignment (EDQA) back order processing including global ATP is used as an internal tool. If several orders cannot be confirmed and a quantity is received that the system can assign, back order processing is begun. For example, if a sales order is cancelled, the released quantity can be reassigned. Such a quantity assignment is called EDQA. In addition to be the cancellation of an order, the event may include incoming stock and a changed order.

EDQA and ROC use order due lists (ODL) which are described in more detail hereinafter. Order due lists use a filter to select orders. The ODL filtering is used if the order is saved. At the time that the order item is saved, all filters of order due lists are scanned. If an ODL is activated, it is being filled by the system via inbound interface with corresponding OLTP documents.

In addition to those drawbacks mentioned above, in conventional back order processing systems, the system has to search for back ordered items. To do this conventional systems filter the whole database to find the affected items. ODLs provide an index function, and allow affected items to be stored immediately after being saved. In this way, affected items can be retrieved also quicker than in conventional systems.

The ODL is an additional data base element. It has a restricted number of fields. It performs the function of an index. It is assigned to a process, for example, EDQA. It performs a pre-selection. The function performed is that of a sorter. The ODL pre-selection can be edited manually. The pre-selection may be at least one of edited, deleted or overruled. The ODLs can be used as a reference for searching items under consideration of its priority. The order types of the handled items, the criteria to filter, and to sort them can be freely configured. Filter and sorter are defined independent from the ODL.
Selection can be aborted after the number of necessary items is reached. The selection from the ODL obeys the corresponding sort profile.
The ODL has a type. The ODL type defines the nature of items that can be contained in the ODL. For example, the types 'Obtain Confirmation (RCV)', 'Lose Confirmation (SPL)', and 'Free Work List (WLS)' are supported. The filter assigned to the ODL comprises a filter type and a filter variant. The filter type defines the criteria and the variant contains the values of the criteria to select the items. Per filter type several variants can be defined. The sorter assigned to the ODL contains the criteria to sort the items. Database objects as well as source code is generated out of the settings of an ODL. An ODL comprises a database table with a specific database index, specific source code for table access. The generated database table depends on the criteria that are used to calculate the item priority (sorter). The generated source code for selection from the ODL can be used, for example, by any SAP SCM application.

The ODLs of the type 'Free Work List' are defined without specifying a filter. The assignment of the sorter is optional. They are filled manually and can be used like a notepad for order items. Items can be added to this ODL in the display of the explanation component of the availability check, in the display of the backorder processing (BOP) result, or in the display of the worklist. The situations where items can be added to work list ODLs are not restricted. These work list ODLs can be used as a work list of BOP.
In conventional systems, the complete selection of affected items from several database tables and LiveCache was necessary. Sorting the items was only possible after filtering them from database. No sort / filter based reference was available. In contrast, in accordance with embodiments of the present invention, it is possible to let the customizable filter work before storing the data in a reference table. Further, a quick item search by creating a customized database object is also possible. It is possible to allow creation of ODLs only if it is needed.
ODLs can be used at any place, where pre-selected lists of orders or order items are necessary (e.g. out of performance reasons). ODLs can be used, for example, in SAP SCM: during event driven quantity assignment (EDQA) and also in back order processing as a reference to items that should be confirmed, during reassignment of quantity confirmations (ROC) as a reference to items that can lose their confirmations and during backorder processing as a work list. Using ODLs a list of items fulfilling the criteria of the filter are selected. The ODL provides an index in the database table, so that all data in the table can be accessed. For example, a sales order that may be stored in LiveCache or 10 database tables where there are around 500 to 800 fields. ODL are linked to the databases, the order ID is used as a key. By accessing the database using a key is fast. The index is used to pre-select very quickly. The index is defined by customizing based on the sorter definition. In this way, the system finds all items associated with the order for BOP.

Figure 2 shows an event driven quantity assignment according to an embodiment of the invention. In Figure 2, the trigger event 1 is a goods receipt. In order to select the affected items an order due lists is used. The order due lists may be stored in stored data 4. In this way, the affected items are selected and may undergo backorder processing in the BOP kernel 3. The confirmed backorders are output as the results list 5. By customizing the event driven gATP (global ATP) services, it is seen that goods received become invisible to a sales order 100 which is incoming during a time in which the goods received are available to be assigned to the sales order. For such a sales order, the ATP check 16 carries on as if the goods had not been received. Thus, by customizing the event driven gATP services, the priority with which the goods are assigned can be determined.

Figure 3 describes in more detail the procedure when a sales order 100 is created or changed and the ensuing ATP check is executed according to a further embodiment of the invention.
If the system is unable to confirm an order, rules based ATP (RBA) is carried out. A rules based availability check can be used to automatically or manually optimize the decision making process between alternatives using predefined rules. A sales order item may be confirmed on basis of RBA. After saving the sales order, its data from an OLTP system are stored in live cache and several database tables in SAP SCM. In general and with view to RBA, such an item can be replaced by another item with product / location that differs from the original. This replacement can be executed by means of backorder processing (BOP). A problem in conventional supply chain management systems is that it is not possible to determine the item that can possibly receive the quantity on replacing product/location, because it is necessary to evaluate RBA anew at the moment of selection. In conventional systems a quick search of affected items is not possible. In particular, in conventional systems, once a sales order is saved, a compoete rules evaluation is necessary. Thus, the quality and speed of the availability check is compromised. In a sales order RBA can cause creating of a main item with several sub-items reflecting the alternatives on product/location level. In RBA, additional criteria are defined in order to determine the outcome, if the order cannot be confirmed. For example, if a customer orders a yellow car, the rule may specify that he will be given a red car instead. Similarly, if the order cannot be confirmed from stock in a first manufacturing location, the rule may specify that the order is honored from stock in a second manufacturing location. In this way, global ATP is provided, to allow, for example, a switch between locations.

With reference to Figure 3, a sales order 100 is received (step 110). For example, it may be received from an OLTP system such as SAP CRM or ERP. The rules based ATP check 16 carries out a rules based ATP evaluation. Rules based ATP (also referred to in the art as global ATP) provides the opportunity to check alternatives when the sales order cannot be completely confirmed. It is highly flexible. RBA evaluation includes one or more location product substitution chains 102. Each chain comprises a set of one or more rules. For example, chain ABC 102 includes substitutions (location products) A, B and C. Location product A may result from a rule that exchanges red phones with yellow phones, if red is not available. Location product B may result from a rule that handles the case that there is a new product on the market and may be an instruction to first sell the old product: for example, if old product is out, send new product. Location product C may result from a rule that arranges to check a second manufacturing location when a product is not available from a first manufacturing location. The chains 102 are stored (step 112) in a separate database table 104. The chains 102 are stored with an identifier. For example, the identifier for chain ABC is "XY". The chain ID is also assigned to corresponding items in an ODL 106. If during the RBA evaluation no confirmation is found for the sales order 100 (step 114), the sales order is saved with item as "confirmed quantity of location product A is equal zero". The non-confirmed sales order is saved in ODL 106 together with the identified chain. When a goods receipt for location product C is received (step 118), the orders that can now be confirmed by the receipt of the goods can be selected using the data stored in the ODL 106. Thus, non-confirmed orders can be confirmed on receipt of goods without having to carry out the RBA evaluation at the selection again. In this way, the system can react on received goods without having to run RBA again. RBA chain identifiers have application during event driven quantity assignment (EDQA) together with order due lists (ODL) and during backorder processing (at the selection and at the parallelization of BOP). Figure 3 shows a system for carrying out an availability check according to an embodiment of the invention. During an ATP check, the chain of product / location substitutions, chain ABC 102, is kept in a buffer, for example, a buffer in an ATP buffer, in SAP SCM on order item level until the order is saved and updated in SAP SCM. During the update process in SAP SCM, the last valid substitution chain 102 is saved in a separate database table 104. Each chain 102 has an ID "chain XY". A new chain / new chain ID is created only if there is no existing chain with same product-location-combinations, while on the contrary, their sequence may differ.
Hereby the chain ID "chain XY" is used later as a connecting part by processes, where the determination of potential replacements of product-location-combinations in order items is necessary. In this way, the necessity of complete rules evaluation at the selection is avoided.

Order due lists are herein described in further detail with reference to Figures 4 and 5. Order due lists are defined, generated and activated using an ODL builder and ODL agent respectively. Generating of corresponding database tables for storage in ODL 106 is performed by the ODL builder and based on customizable filter and sort parameters. The ODL builder also generates selection source code, which is used during the EDQA and filter source code that is used for filling the index tables. The function of the ODL builder is to build a kind of cross reference for items in accordance with a chain identifier to allow a fast access to the appropriate sales orders. Once the ODL is generated, the generated tables are filled by an ODL agent, for example, in SAP APO. The data 120, for example, "Location product A with confirmed quantity equal zero", to be filled in the generated tables is prepared by the rules based ATP check 16 caused by order processing in the OLTP system, for example, a SAP CRM Order Management system. The data to be filled in the tables may be buffered in an ATP buffer prior to being filled in the tables in a ODL 106 by the ODL agent. The ATP rules evaluation will store the corresponding chain ABC 102 in a temporary data buffer, ATP buffer. The data is stored in the ATP buffer until the document is saved. The ODL is a data base object that may comprise one or more tables. The tables are generated by the ODL building according to sort profiles to allow fast data selection. The ODL builder builds the database tables of ODL in the SAP APO. The table structure depends on the sort profile which is used during the selection of the orders. The sort profile defines the sequence in which the items are to be processed. The sort profile specifies the characteristics, their sequence (or weighting) and the sort direction.
Figure 4 shows an activated ODL according to an embodiment of the invention. The ODL definition 30 includes a predefined filter type 32 and filter variant 40, for example, a filter type: CHAIN XY with filter variant: NR_ONE. This forms a filter where the evaluation of the chain is enabled. All replacements of the chains containing the specified products will enhance the selection range of the product. The ODL definition 30 may also include a sort profile 34, for example, a sort profile: SORT 2. The filter type 32 and the sort profile 34 are customizable. The ODL 30 has an identifier 36 and a name 38. A filter variant 40 with filter conditions for a filter type can be created and used. As mentioned above, the filter selects items corresponding to the particular filter to the particular data base. For example, the filter type may define - parameter - customer type. The filter variant may define parameter value - customer type - very important or medium. The variant can be maintained by clicking on the 'maintain variant' icon 41. The predefined sort profile 34 is chosen. In the example shown, the sort profile 34 is SORT2. Once the ODL is defined, the corresponding table can be generated by clicking on generate icon 42. A generated table can be activated by clicking on the activate icon 44. It can be activated and filled by data stored in a database by clicking on the icon activate and fill 46. In the example shown it is seen that the ODL definition 30 includes a status 48 which shows that the ODL is "activated".

The ODL builder data basis comprises the following object groups: structure for definition of fields valid for all filter types and sort profiles, database tables for filter definition and generation of corresponding program code statements, database tables for sort profile definition and generation of corresponding program code statements and database table for assigning of filter/sort to ODL tables and generation/activation of the tables.
The ODL definition further includes a filter variant definition according to an embodiment of the invention. Having chosen a filter type 32, a filter variant 40 that is valid for the filter type can be chosen. The variant is predefined, i.e. already created and maintained. Further, the filter variant can be maintained. It is also possible to create a filter variant. The filter variant includes the filter conditions according to the filter type parameters. The filter variant 40 and the filter type 32 build together the actual filter 32, 40. Further, a sort profile 34 can be chosen from one of the predetermined, maintained sort profiles. Within the maintenance view screen it is also possible to change ODL description, delete ODLs, generate ODLs, drop and refresh code, activate ODLs 44, activate and fill tables 46, deactivate ODLs. As mentioned, the filter type definition, the sort profile definition can be customized. Based on the sort profile 34, a database table with appropriate database index is generated by clicking on the generate icon 42. Based on the chosen filter 32 and program code template, a program name 50, for example, XYZ, and program code for filling the table by the ODL agent 14 is generated. Based on the chosen sort profile 34 and program code template, a program name 50 and program code for selection from the table by EDQA is generated. Once generated, the status 48 of the ODL becomes GENERATED 52. It is noted that the ODL table, although generated, does not contain any entries at this point. Activation of a table by clicking on the activate icon 44 immediately enables filling it by necessary and eligible index date. The function activate and ill 46 can be used for filling the table with index data of possibly already existing backorder items, which are eligible for the table. The table (filter/sort) can be valid for greater than or equal to 1 trigger events 1. Reassigning a filter/sort makes ODL organization necessary. For example, if it is decided to use a different filter but the existing data does not meet the conditions of reorganizing.
Below the ODL definition a screen shot shows an example of a filter variant. The filter parameters 'product' and 'source location' are chosen and can be maintained.

Figure 5 shows a screen shot showing how the selection via a chain is visible in the system according to an embodiment of the invention.
The indicator "consider substitutes" 130 and the button "add substitutions" 132 both work at the chain. They work together with the range "product". "Multilevel ATP" 134 and "add components" 136 work in the same way but using another source to get the list of products.
The function "Range" is a standard functionality in the user interface of SAP. It means that the user can for example add a list of product names and/or a range means all products between "A" and "CCCC" and/or a pattern of a product name, means for example, all products whose name starts with "A". The user has two possibilities to use the chain together with the selection via the product. The basis for this functionality is always the list of products specified in the range "product". In the following it is referred to as "specified products".
If the indicator "consider substitutes" 130 is set, automatically all other products which are related to the specified one will be added to the range of products in the filter. This enhancement of the filter range is done at any execution of the filter. The list is based on the current information in the replacement change, but it cannot be influenced by the user.
If in stead the button "add substitutions" 132 is pressed, the actual content of the replacement chain is read and added to the range "product" that can be seen in the screen. This is done if the user defines the filter variant. The range will contain the actual active situation and will not reflect automatically any changes done in the future in the rules. To get an update, the filter variant of the replacement is changed. This can be done with minimal manual effort. If the range is enhanced by the content of the related replacement chains, the user can modify the list of products. He can add or delete entries out of the list.

It is to be noted that the above-mentioned embodiments illustrate rather than limit the invention, and that those skilled in the art will be able to design alternatives without departing from the scope of the appended claims. For example, the computational aspects described here can be implemented in digital electronic circuitry, or in computer hardware, firmware, software, or in combinations of them. Where appropriate, aspects of these systems and techniques can be implemented in a computer program product tangibly embodied in a machine-readable storage device for execution by a programmable processor, and method steps can be performed by a programmable processor executing a program of instructions to perform functions by operating on input data and generating output. The mere fact that certain measures are recited in mutually different claims does not indicate that a combination of these measures cannot be used to advantage.

## Claims

1. A system for automatically assigning an incoming quantity of goods in response to an event, the system comprising:
an inbound interface for interfacing with a plurality of data storage devices in at least one of which the incoming quantity of goods are stored as data and a plurality of sales orders to be confirmed are stored;
an execution memory operable to hold a software system, and
a processor for coupling to the inbound interface and the execution memory, the processor being operable to execute the software system such that the software system operates:
to select a subset of sales orders from the plurality of sales to be confirmed according to one or more predetermined criteria and to assign to the subset of sales orders the incoming quantity of goods.

2. A system according to claim 1, wherein an order due list defines the predetermined criteria.

3. A system according to claim 1 or claim 2, wherein the system operates to customize the order due list to select sales orders in accordance with a priority rating.

4. A system according to any preceding claim, wherein the plurality of sales orders are backorders.

5. A system according to any preceding claim, wherein the category of the incoming goods is changed so that are no longer considered in an availability check.

6. A system according to any preceding claim, wherein the software system operates to immediately assign the incoming quantity of goods to the subset of sales orders.

7. A computer implemented method of automatically assigning an incoming quantity of goods in response to an event, the method comprising:
interfacing with a plurality of data storage devices in at least one of which the incoming quantity of goods are stored as data and a plurality of sales orders to be confirmed are stored;
hold a software system in an executable memory, and
coupling the inbound interface to the execution memory,
executing the software system such that the software system operates:
to select a subset of sales orders from the plurality of sales to be confirmed according to one or more predetermined criteria and to assign to the subset of sales orders the incoming quantity of goods.

8. A user terminal comprising means operable to perform the method of claim 7.

9. A computer readable storage medium storing a program which when run on a computer controls the computer to perform the method of claim 7.
